**Europäisches Patentamt**

**European Patent Office**

**Office européen des brevets**

(19)

(11) Publication number: **0 136 862**

**A2**

(12) # EUROPEAN PATENT APPLICATION

(21) Application number: **84306339.7**

(22) Date of filing: **17.09.84**

(51) Int. Cl.⁴: **B 60 C 27/04**

(30) Priority: **19.09.83 NZ 205643**

(43) Date of publication of application:
**10.04.85 Bulletin 85/15**

(84) Designated Contracting States:
**AT BE CH DE FR GB IT LI LU NL SE**

(71) Applicant: **Murdoch, Abram Roy**
**P.O. Box 83 Arthur's Point**
**Queens Town Central Otago(NZ)**

(72) Inventor: **Murdoch, Abram Roy**
**P.O. Box 83 Arthur's Point**
**Queens Town Central Otago(NZ)**

(74) Representative: **Healy, Cecilia Patricia**
**134 Grayswood Avenue**
**Coventry, CV5 8HQ(GB)**

(54) Gripping shoe device for a vehicle wheel, traction device and wheel having such a device.

(57) A gripping shoe device or traction device for association with a vehicle wheel (3A) preferably having a tyre thereon comprises a plurality of shoe members (1, 4A) supported at least in part by mounting means (8, 1A) engageable to rotate with the wheel. The shoe members (1, 4A) are movable radially inwardly under the weight of the vehicle when in a ground contact condition so that the weight of the vehicle is not solely carried by the mounting means (8, 1A) when a shoe member (1. 4A) is in ground contact.

FIG 4.

EP 0 136 862 A2

TITLE:- " Gripping Shoe Device for a Vehicle Wheel, Traction Device and Wheel having such a Device. "

This invention relates to a gripping shoe device for a vehicle wheel, a traction device and to a wheel having such a device.

The present invention relates to improvements in and/or relating to a gripping shoe device for association with a vehicle wheel having a tyre thereon and to means and methods applicable thereto including the use thereof.

Various devices of the above mentioned kind have previously been disclosed. For example, we refer to New Zealand Patent Specification Nos. 171983/174776/174833, 173081 and 183676. US patents Nos. 2640522, 2553712, 1727652, 2169950, 1977900 and 1540470 describe traction devices which are designed to be attached to vehicle wheel assemblies with the object of improving a vehicles traction in adverse conditions. All of the devices described in the aforesaid specifications includes a mounting member adapted to be fixed to the hub of a vehicle wheel assembly and a plurality of traction bars engagable with the mounting members so as to extend radially outwardly therefrom, each of the traction bars having a tyre engaging section which extends over and substantially surrounds the tyre of the vehicle wheel assembly to which it is fitted. When vehicles with this type of traction device are travelling slowly or starting up, the traction bars effectively become cutting blades and it is common for a vehicle with this type of traction device to become bogged down in soft ground because, as the vehicle wheel assemblies revolve and skid a hole is cut in the ground surface and the wheel assembly sinks into it. The more traction bars fitted to a wheel assembly the more likely this problem is to occur, and this is attributed to the fact that there is no or very little contact between the vehicle tyre and the ground where the traction devices engage with a tyre.

There is however a need for an effective gripping device which is readily engaged and disengaged from a vehicle but which is capable of enhancing the grip of a vehicle on a variety of surfaces yet be arranged so as to allow the driving of the vehicle over hard surfaces. Such a device would have application on the driving wheels of motor vehicles or utility vehicles for use about a farm.

It is therefore an object of the present invention to provide means and/or methods which will go at least some way to meet some of the above mentioned *desiderata* or at least provide the public with a useful choice.

Accordingly in one aspect the present invention consists in a gripping shoe device for association with a vehicle wheel having a tyre thereon comprising:

mounting means engageable to rotate with the wheel and

a plurality of shoe members that each extends substantially radially of a wheel and over at least a portion of the tread region of the tyre in use, said shoe members being supported at least in part from said mounting means, the construction and arrangement being such that sufficient radial movement inwards of each shoe member occurs when contacting the ground so that the weight is carried through the tyre and not through the mounting means when the ground reaction is sufficiently strong.

Preferably said mounting means is connected to the rim or hub of the wheel.

Preferably each shoe member is guidably slidable radially with respect to said mounting means.

Preferably the guidable sliding occurs within roller guides.

Preferably there are means to resiliently bias each shoe to a particular position when not in a ground contacting condition.

Preferably the means to resiliently bias each shoe is a flexible O-ring.

In a further aspect the present invention consists in a gripping shoe device for association with a vehicle wheel having a tyre thereon comprising:

mounting means engageable to rotate with the wheel,

a plurality of shoe members that are each slidably mounted from said mounting means so that each extends substantially radially of a wheel to which it is fitted and over at least a portion of the tread region of the tyre in use yet can move inwardly and outwardly at least to some extent and

a flexible O-ring engaging each shoe member at a region other than a ground contacting region thereof so as to bias each to a preferred position, the construction and arrangement being such that sufficient radial movement inwards of each shoe member occurs when contacting at least hard ground so that the weight is carried through the tyre and not throught the mounting means.

In a further aspect the invention consists in a traction device for vehicles comprising a mounting member adapted to be carried by a vehicle wheel assembly so as to rotate therewith and a plurality of traction bars engagable with the mounting member so as to extend radially outwardly therefrom wherein each of the traction bars has a shank engagable with the mounting member and a tyre engaging portion extending from the shank which, when the traction device is mounted on a vehicle wheel assembly extends axially inwardly and over approximately half of the tread width of the tyre of the wheel assembly to which the traction device is fitted.

Preferably the device is substantially as hereinafter described.

In a further aspect the present invention consists in a wheel having a device in accordance with the present invention operatively mounted thereto.

In a further aspect the present invention consists in the use of a device in accordance with the present invention.

One preferred form of the present invention will now be described with reference to the accompanying drawings in which:

Figure 1 is a view showing a preferred device in accordance with the present invention mounted to a vehicle driving wheel in use and showing one of the shoe devices in a ground contacting position and showing the movement thereof and the corresponding movement of the flexible O-ring to allow the carriage of the weight through the tyre rather than through the mounting means which would be the case if the inward movement of the shoe did not occur,

Figure 2 is a partial diagram of the device showing the arrangement of the preferred spring steel gripping tyne or shoes and how the same can move inwardly and outwardly despite location to an extent by at least the flexible O-ring between rollers,

Figure 3 is a sectional view of the arrangement as depicted in Figure 2 showing in a clearer form the nature of the guided movement inwardly and outwardly of each shoe and the method of engagement of each shoe with the O-ring,

Figure 4 is a different side view of a traction device in accordance with the present invention shown fitted to a vehicle wheel assembly, and

Figure 5 is a partial side in sectional view of the traction device of Figure 4.

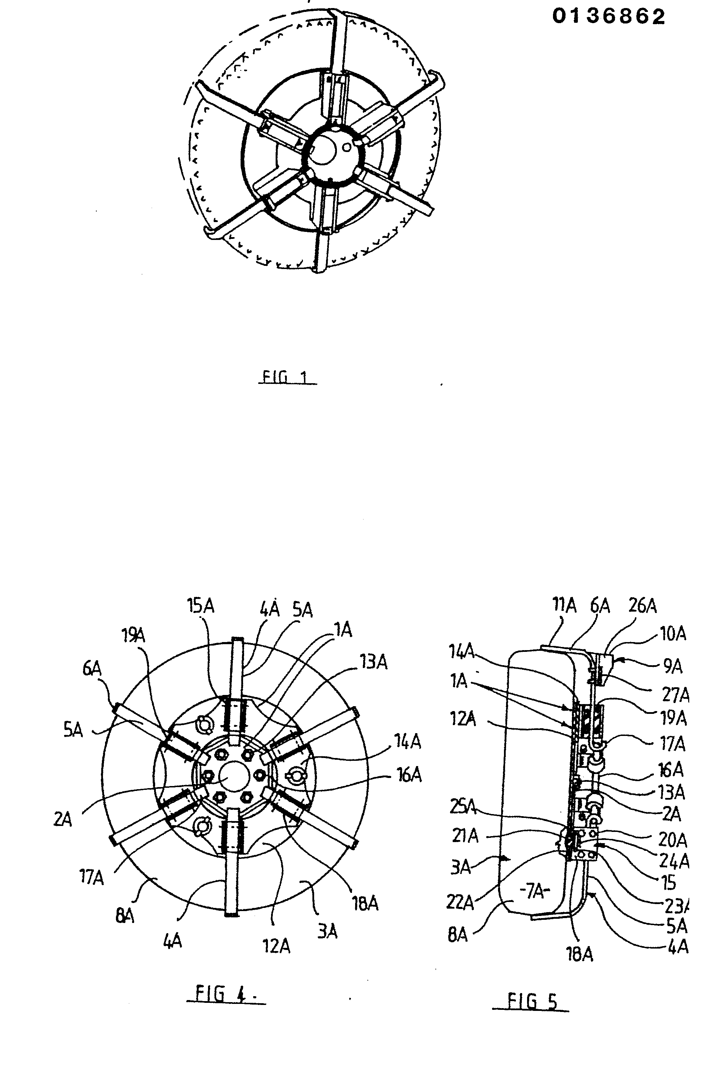

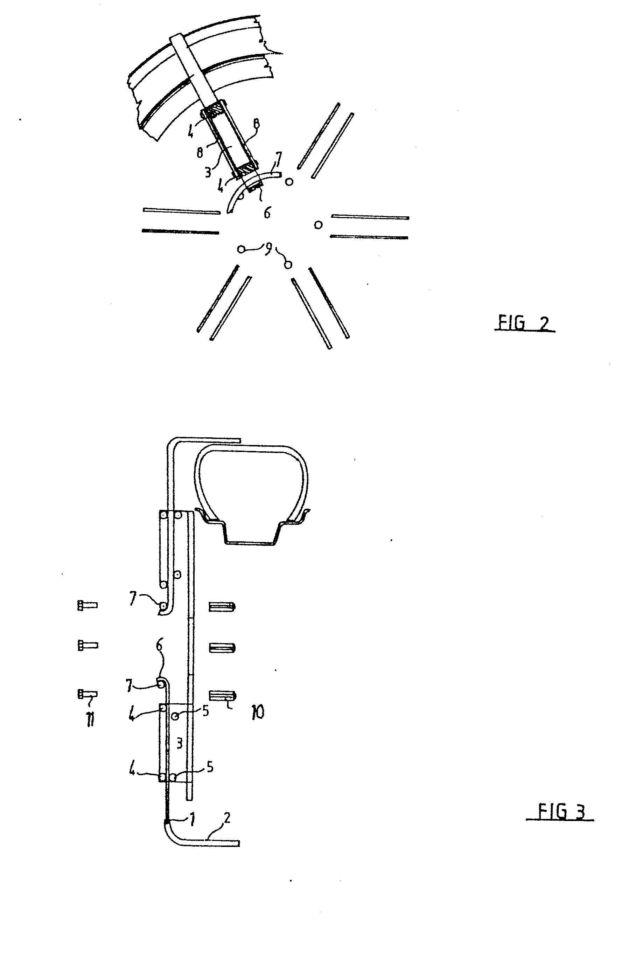

In the preferred form of the present invention the device would be mounted as shown in Figure 1. The device consists of mounting means which comprises all of the device other than that portion which provides the shoe and possibly the O-ring. Referring specifically to Figures 2 and 3 it can be seen that each shoe 1 is bent so as to define a region 2 which extends at least partly over the tread region of a tyre while the other region 3 is preferably sufficiently straight to allow its inward and outward movement between sets of rollers 4 and 5 respectively. The inner end of each shoe has a region 6 that is curved so as to engage about an O-ring 7 so as to ensure the location of each shoe reasonably hard against the periphery of the wheel yet will allow the further inward movement of each shoe as the tyre is distorted as it sequentially takes weight.

Preferably the rollers 4 and 5 are formed of nylon, for example, 20mm diameter self lubricating nylon rollers and each shoe is formed of spring steel. As can be seen the preferred arrangement is for six shoes in each device.

The mounting means itself includes a plurality of side plates 8 which serve as a mount for the rollers 4 and 5 while at the same time providing a restraint on movement of each shoe about the mounting means.

Preferably the side plates are welded to the main disc of the mounting means and preferably are 80 x 6 x 110mm (in dimension).

Preferably the drilled holes 9 are for engagement to the axle studs using an appropriate adaptor nut which will not only retain the wheel on to the axle but also the device. This arrangement can best be seen by reference to Figure 3 where there are shown adaptor wheel nuts 10 which hold the wheel on to the stud axles yet provide a threaded bore into which bolts 11 can be inserted through the holes 9 to hold the device in accordance with the present invention into engagement.

Preferably the plate used is mild steel 5mm thick. Preferably the shoes are formed of 25 x 10mm spring steel.

A person skilled in the art will appreciate the easy means whereby a device in accordance with the present invention can be fitted. For example, the adaptor wheel nuts 10 can be left permanently on the vehicle so it is only a question of engaging the device thereto using a plurality of bolts 11 in order to attach the device.

For clarity a description of the mode operation of the invention in one of its forms will now be described with reference to Figures 4 and 5 of the accompanying drawings. Alternatively means on wheel rims can be used for engaging mounting means or a mounting member of the present invention e.g. by three threaded studs.

With respect to Figures 4 and 5 of the drawings, the traction device illustrated comprises a mounting member generally indicated by arrow 1A adapted to be fixed to the hub 2A of a vehicle wheel assembly generally indicated by arrow 3A, a plurality of traction bars generally indicated by arrow 4A engagable with the mounting member 1A so as to extend radially outwardly therefrom, wherein each of the traction bars 4A has a shank 5A engagable with the mounting member 1A and a tyre enagaging portion 6A extending from the shank 5A, which when the traction device is mounted on the vehicle wheel assembly 3A, extends radially outwardly and over approximately half of one said 7A of the tyre 8 of the vehicle wheel assembly 3A to which the traction device is fitted.

The traction device can include a paddle generally indicated by arrow 9A adapted to be mounted on the shank 5A of the traction bar 4A such that its distal surface 10 is substantially aligned with the distal surface 11A of the tyre engaging portion 6A.

The mounting member 1A comprises a mounting plate 12A adapted to be fixed to the hub 2A of a wheel assembly 3A by wheel assembly studs 13A and a traction mounting bar mounting plate 14A removable fixed to the mounting plate 12A said traction bar mounting plate 14A having a plurality of radially directed traction bar support members generally indicated by arrow 15A and a tension member 16A adapted to engage the inner end 17A of the shanks 5A of the traction bars 4A. The tension member 16A can be a continuous rubber ring.

By way of example the traction bar mounting plate 14A mounts six traction bar support members 15A, for six separate traction bars although as will be appreciated less or more traction bars 4A may be catered for.

The traction bar support members each comprise spaced and parallel plates 18A which are rigidly fixed to the traction bar mounting plate 14A and the shanks 5A of the traction bars 4A are assembled relative to the support members 15A in a sandwich of top and bottom resilient pads 19A with the shank 5A of the traction bars 4A being secured in place by bolts 20A.

As aforesaid the traction bar mounting plate 14A is removably fixed to the mounting plate 12A and this can be achieved by having for example three equally radially spaced studs 21A fixed to and extending from the mounting plate 12A such studs 21A being adapted to engage in corresponding apertures 22A in the traction bar mounting plate 14A, the mounting plate 14A being secured in position by pins 23A extending through apertures 24A in the studs 21A and secured in position by ringlets 25A.

The traction bars 4A are fabricated from flat steel bar and their ends 17A are fashioned into a hook so as to be readily secured by the rubber ring tension member 16A.

The optional paddle 9A (Figure 5) can comprise a paddle blade 26A having a fixed perpendicular mounting plate 27A extending therefrom the paddle can be fitted to the shank 5A of the traction bars 4A by conventional means such as bolts although for different conditions it may be advisable to re-position the paddle 9A in which case fixing means such as U-bolts could be used so that the paddle is slidable up and down the shank 5A of the traction bar prior to the bolts being tightened.

When the traction device is not required the traction bar mounting plate 14A can be removed from the vehicle wheel assembly 3A leaving only the mounting plate 12A thereon. The mounting plate 12A may be fashioned so as not to detract from the general appearance of the wheel assembly to which it is fitted.

Both the mounting plate 12A and the traction bar mounting plate 14A are generally annular members which can be conveniently fabricated from mild steel however other materials may be used.

It is to be noted that on assembly of the traction device to a vehicle wheel assembly the tyre engaging portion 6A of the traction bars only extend over approximately one half of the tyre 8A adjacent the device. The tyre engaging portion 4A is preferably fabricated from flat bar and in use when the vehicle wheel assembly mounting the traction device is on soft ground there is still likely to be contacted created between the other half 7A of the tyre 8a and the ground surface below as well as the tyre engaging portion 6A substantially reducing the chance of a vehicle getting bogged down, because the traction bars are not tending to cut a hole in the ground surface over the width of a tyre which is indicated.

The capability of the device is such that over short distances the device can run with no undue stress being passed through the axle of the vehicle or through the device itself even although the surface may be a normal hard road surface. This is particularly suitable where for instance, a farmer may wish to travel a short distance along a sealed or gravel road to a paddock where gripping enhancement is required if his utility vehicle is to travel about the paddock. It is believed therefore that a device in accordance with the present invention will find widespread acceptance.

Claims:-

1. A gripping shoe device for association with a vehicle wheel having a tyre thereon comprising:

mounting means engagable to rotate with the wheel,

a plurality of shoe members that each extend substantially radially of a wheel and over at least a portion of the tread region of the tyre in use,

said shoe members being supported at least in part from said mounting means, the construction and arrangement being such that that sufficient radial movement inwards of each shoe member occurs when contacting the ground so that the weight is carried through the tyre and not through the mounting means when the ground reaction is sufficiently strong.

2. A device as claimed in Claim 1 where in each shoe member is guidably slidable radially with respect to said mounting means.

3. A device as claimed in Claim 2 wherein the guidable sliding occurs within roller guides.

4. A device as claimed in any one of the preceding claims wherein means is provided to resiliently bias each shoe to a particular position when not in a ground contacting condition.

5. A device as claimed in Claim 4 wherein said means to resiliently bias each shoe is a flexible O-ring.

6. A gripping shoe device for association with a vehicle wheel having a tyre thereon comprising:

mounting means engageable to rotate with the wheel,

a plurality of shoe members that are each slidably mounted from said mounting means so that each extends substantially radially of a wheel to which it is fitted and over at least a portion of the tread region of the tyre in use yet can move inwardly and outwardly at least to some extent and

a flexible O-ring engaging each shoe member at a region other than a ground contacting region thereof so as to bias each to a preferred position, the construction and arrangement being such that sufficient radial movement inwards of each shoe member occurs when contacting at least hard ground so that the weight is carried through the tyre and not through the mounting means.

7. A traction device for vehicles comprising a mounting member adapted to be carried by a vehicle wheel assembly so as to rotate therewith and a plurality of traction bars engagable with the mounting member so as to extend radially outwardly therefrom wherein each of the traction bars has a shank engagable with the mounting member and a tyre engaging portion extending from the shank which, when the traction device is mounted on a vehicle wheel assembly extends axially inwardly and over approximately half of the tread width of the tyre of the wheel assembly to which the traction device is fitted.

8. A traction device as claimed in Claim 7 including a paddle adapted to be mounted on the shank of the traction bar so as to have its distal surface substantially in alignment with the distal surface of the tyre engaging portion.

9. A traction device as claimed in Claim 7 wherein the mounting member comprises a mounting plate adapted to be fixed to the hub of a vehicle wheel assembly by wheel assembly studs and a traction bar mounting plate adapted to be removably fixed to said mounting plate, said traction bar mounting plate having a plurality of radially directed traction bar support members and a tension member adapted to engage the inner ends of the shanks of said plurality of traction bars (secured by said traction bar mounting plate).

10. A traction device as claimed in Claim 9 wherein the tension member is a continuous rubber ring.

11. A traction device as claimed in Claim 9 wherein the mounting plate mounts six traction bar support members arranged to support up to six traction bars.

12. A traction device as claimed in Claim 8 wherein the traction bar support members each comprise spaced and parallel plates which are rigidly fixed to said mounting member and the traction bars are assembled relative to the bar support members in a sandwich of top and bottom resilient pads with the shank of the traction bars supported between the resilient pads.

13. A wheel having a device as claimed in any one of the preceding claims operatively mounted thereto.

14 The use of a device as claimed in any one of Claims 1 to 13.

0136862

FIG 1

FIG 4.

FIG 5

2/2

FIG 2

FIG 3